# EUROPEAN PATENT APPLICATION

(11) **EP 2 492 522 A1**
(43) Date of publication of application: **29.08.2012**
(21) Application number: 11250210.9
(22) Date of filing: 24.02.2011
(51) Int. Cl.: F16B 21/16, F16B 45/02

(54) **Safety hook with a releasable rotable hanging loop**

(71) Applicant: Sheng Hung Hsing Co., Ltd., Homei Town Chang hua (TW)
(72) Inventor: The designation of the inventor has not yet been filed
(74) Representative: Brookes Batchellor LLP

(57) **Abstract**

A safety hook (1) includes a hook body comprising an internally threaded ring portion (12) on bottom; a bolt (14) including upper threads (141) passing the ring portion, two intermediate annular flange members (143), and a lower annular groove (142); a nut (13) threadedly secured to the upper threads; a biasing member (15); a rotatable hanging loop (17) including a top ring portion (173), an annular trough (171) on an inner surface of the top ring portion, and a loop (172) depending downward from the top ring portion; and a cylindrical connection member (16) including a lengthwise central hollow (161), external threads (162) on an upper portion, a spring depressible detent (164) through the upper portion, an intermediate annular flange (165), and two opposite steel balls (163) each through a lower portion; and a gate (Z) pivotably secured to the hook body for opening or closing (Q) mouth of the hook body.

## Description

### BACKGROUND OF THE INVENTION

### 1. Field of Invention

The invention relates to safety hooks and more particularly to such a safety hook having a rotatable hanging loop which is replaceable.

### 2. Description of Related Art

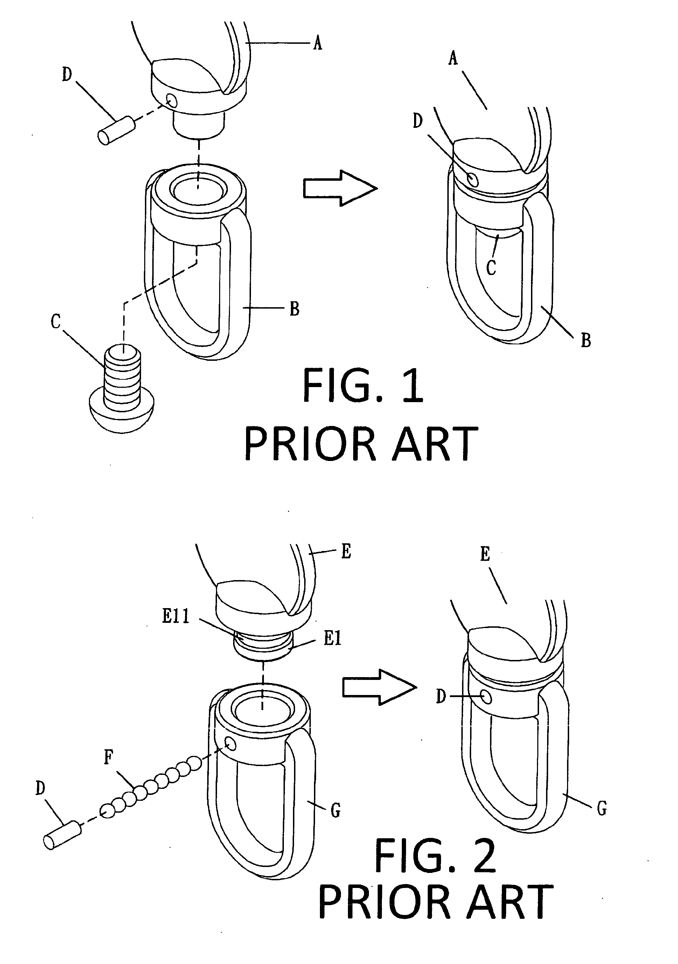

Safety hooks are used in fall prevention. A typical safety hook is shown in FIG. 1 and comprises a hook body A, a rotatable hanging loop B, a fastener C for attaching the rotatable hanging loop B to the hook body A, and a pin D for securing the fastener C to the hook body A. A ring, line, or other accessory may be looped the mouth of the hook. The rotatable hanging loop B may rotate about the hook body A.

Another typical safety hook is shown in FIG. 2 and comprises a hook body E including a cylindrical bottom projection E1 having an annular groove E11, a rotatable hanging loop G, a plurality of steel balls F received in the groove E11 and rotatably disposed between a top ring of the rotatable hanging loop G and the groove E11, and a pin D for securing the top ring of the rotatable hanging loop G to the hook body A. A ring, line, or other accessory may be looped the mouth of the hook. The rotatable hanging loop G may rotate about the hook body A.

However, the fastening of the rotatable hanging loop B and the hook body A (or the fastening of the rotatable hanging loop G and the hook body E) by the pin D is permanent. Hence, it is impossible of replacing the rotatable hanging loop B or G with a new one if it is broken or malfunctioned. This can increase the financial burden on a buyer. Thus, the need for improvement still exists.

### SUMMARY OF THE INVENTION

It is therefore one object of the invention to provide a safety hook comprising a hook body comprising an internally threaded ring portion on bottom; a bolt including upper threads passing the ring portion, two intermediate annular flange members, and a lower annular groove; a nut threadedly secured to the upper threads; a biasing member; a rotatable hanging loop including a top ring portion, an annular trough on an inner surface of the top ring portion, and a loop depending downward from the top ring portion; and a cylindrical connection member including a lengthwise central hollow, external threads on an upper portion, a spring depressible detent through the upper portion, an intermediate annular flange, and two opposite steel balls each through a lower portion; and a gate pivotably secured to the hook body for opening or closing mouth of the hook body.

The above and other objects, features and advantages of the invention will become apparent from the following detailed description taken with the accompanying drawings.

### BRIEF DESCRIPTION OF THE DRAWINGS

FIG. 1 depicts a conventional safety hook;
FIG. 2 depicts another conventional safety hook;
FIG. 3 is an exploded view of a safety hook according to the invention;
FIG. 4 is a perspective view of the assembled safety hook of FIG. 3 where the hook mouth is closed;
FIG. 5 is a side elevation in part section view of FIG. 4;
FIG. 6 is a side elevation of FIG. 4;
FIG. 7 is a view similar to FIG. 5 showing external forces exerting on both the gate and the straddle member;
FIG. 8 is a view similar to FIG. 7 showing the lock pin being moved to disengage from the locking member;
FIG. 9 is a view similar to FIG. 7 showing the gate being pivoted clockwise to open the mouth of the hook after disengaging the lock pin from the locking member to dispose the locking member in a free state;
FIG. 10 is a fragmentary view of the portion around the rotatable hanging loop showing the initial step 1 of disengaging the rotatable hanging loop from the hook body;
FIG. 11 is a view similar to FIG. 10 showing the final step 2 of disengaging the rotatable hanging loop from the hook body; and
FIGS. 12, 13 and 14 are side elevations of the safety hook of the invention showing different first, second and third rotatable hanging loops respectively.

### DETAILED DESCRIPTION OF THE INVENTION

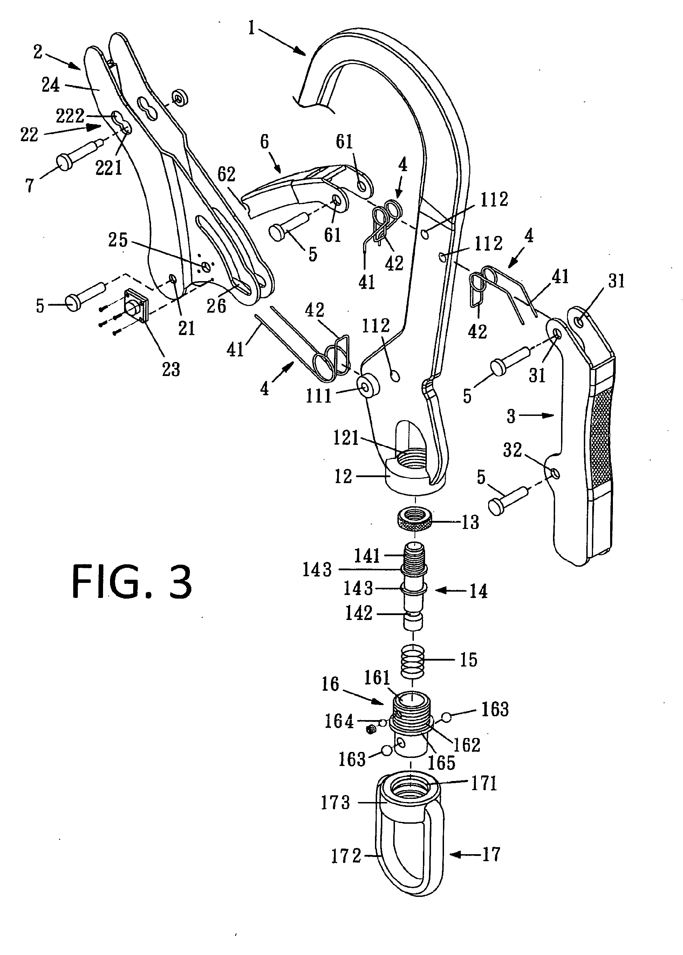

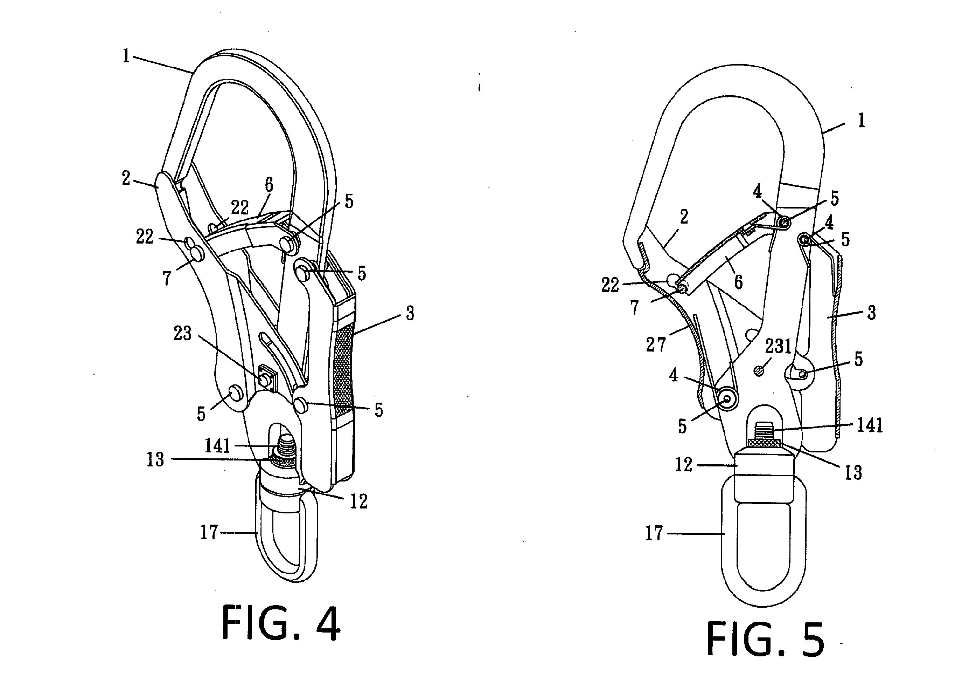

Referring to FIGS. 3 to 14, a safety hook in accordance with the invention comprises the following components as discussed in detail below.

A curved hook body 1 comprises a bossed hole 111 on a lower shank portion and a plurality of (three) through holes 112 on the shank portion; a ring portion 12 on bottom of the shank portion, the ring portion 12 including internal threads 121; a bolt 14 including upper threads 141 upward passing the threads 121, two intermediate annular flanges 143, and a lower annular groove 142; a nut 13 threadedly put on the threads 141; a torsion spring 15; a rotatable hanging loop 17 including an annular trough 171 on an inner surface of a top ring portion 173, and a loop 172; and a cylindrical connection member 16 including a lengthwise central hollow 161, external threads 162 on an upper portion, a spring depressible detent 164 through the upper portion, an intermediate annular flange 165, and two opposite steel balls 163 each through a lower portion.

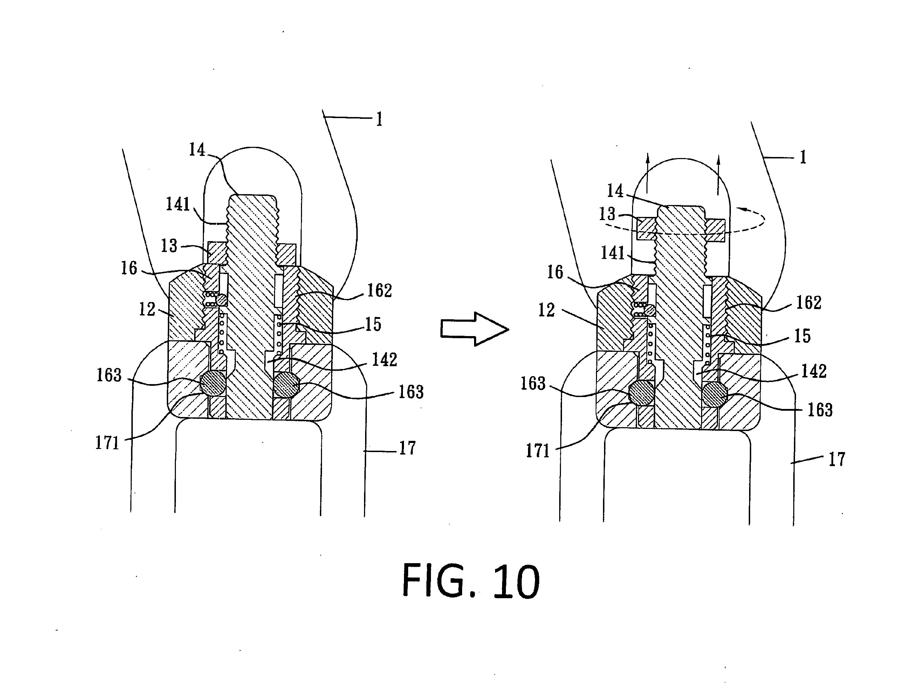

in an assembled state (see FIG. 10), the bolt 14 is disposed in the hollow 161; the portion of the connection member 16 below the flange 165 is disposed in the top ring portion 173 of the rotatable hanging loop 17 with the steel balls 163 rotatably disposed in both the lower portion of the connection member 16 and the trough 171, the flange 165 is rested on top of the rotatable hanging loop 17, the detent 164 has one end urged against an outer surface of the bolt 14 between the flanges 143 and the other end urged against the threads 121, the threads 162 are threadedly secured to the threads 121, and the spring 15 is substantially put on the bolt 14 and biased between the lower one of the flanges 143 and the groove 142.

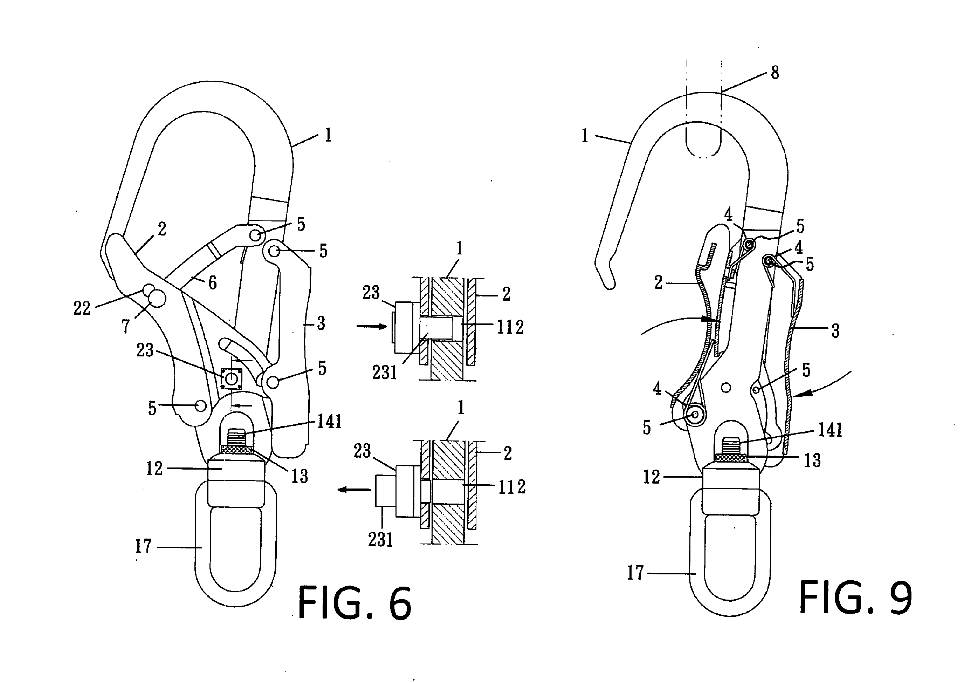

A gate 2 is a straddle-like member and comprises two parallel members 24, an interconnecting member 27 formed therebetween, a holed unit 22 on either parallel member 24 and including first and second holes 221, 222 communicating with each other, a first through hole 21 on either parallel member 24 and being distal the holed unit 22, a second through hole 25 on either parallel member 24 and being proximate to the first through hole 21, an elongated slot 26 on either parallel member 24 proximate the first through hole 25, and a trigger member 23 threadedly secured to the second through hole 25 of one parallel member 24 and including a spring depressible push button 231 adapted to be manually driven to partially dispose in the through hole 112 for locking the gate 2 (see upper right side of FIG. 6) or withdraw from the through hole 112 for partially unlocking the gate 2 (see lower right side of FIG. 6). A straddle member 3 comprises two first through holes 31 at one end and two second through holes 32 in the intermediate portion. A locking member 6 is a straddle-like member and comprises two through holes 61 at one end and two recesses 62 at the other end.

A lock pin 7 is moveably disposed in the opposite first holes 221 (or second holes 222) of the holed units 22. A pin 5 is inserted though the bossed hole 111 to loosely secure the gate 2 and the hook body 1 together. Another pin 5 in inserted through the through holes 61 and 112 to loosely secure the locking member 6 and the hook body 1 together. Still another pin 5 in inserted through the first through holes 31 and the through hole 112 to loosely secure the hook body 1 and the straddle member 3 together. A further pin 5 in inserted through the second through holes 32 and the slots 25 to loosely secure the gate 2 and the straddle member 3 together. The pin 5 is adapted to move along the slots 25.

A plurality of spring members 4 each is used to enable one component to elastically pivot about the other member. In detail, one spring member 4 has a joining portion put on both sides of the bossed hole 111, one end 41 urged against the interconnecting member 27, and the other end 42 urged against two bent portions of the parallel members 24. As a result, the gate 2 may elastically pivot about the bossed hole 111 relative to the hook body 1. Another spring member 4 has a joining portion put on another pin 5, one end 41 urged against an interconnecting portion of the locking member 6, and the other end 42 urged against hook body 1. As a result, the locking member 6 may elastically pivot about another pin 5 at the through holes 112 relative to the hook body 1. A further spring member 4 has a joining portion put on still another pin 5, one end 41 urged against an interconnecting member of the straddle member 3, and the other end 42 urged against the hook body 1. As a result, the straddle member 3 may elastically pivot about still another pin 5 at the first through holes 31 relative to the hook body 1. In the locked state of the hook, open ends of the gate 2 are urged against the open end of the hook body 1 by the spring member 4 associated with the gate 2 (i.e., the mouth of the hook is closed).

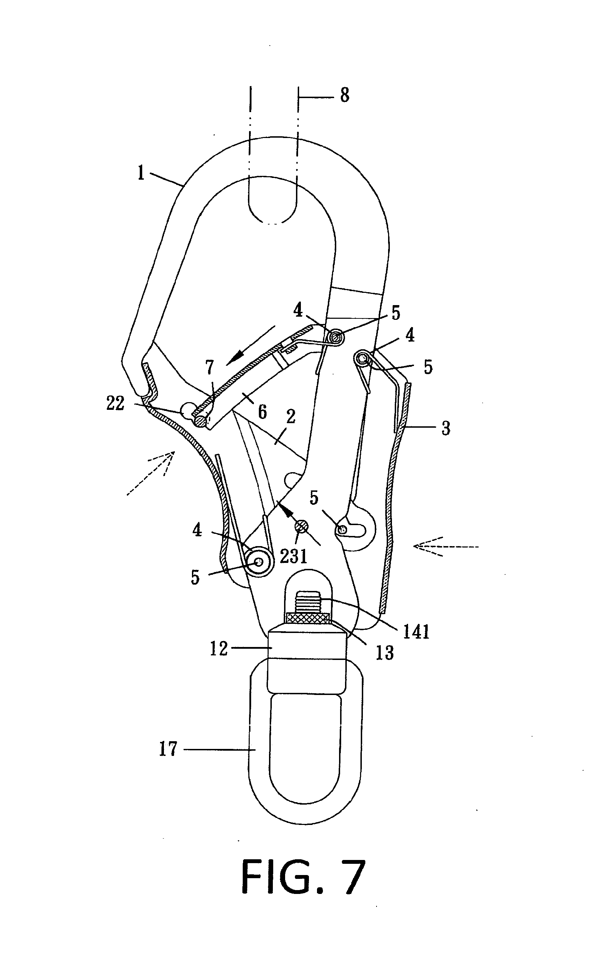

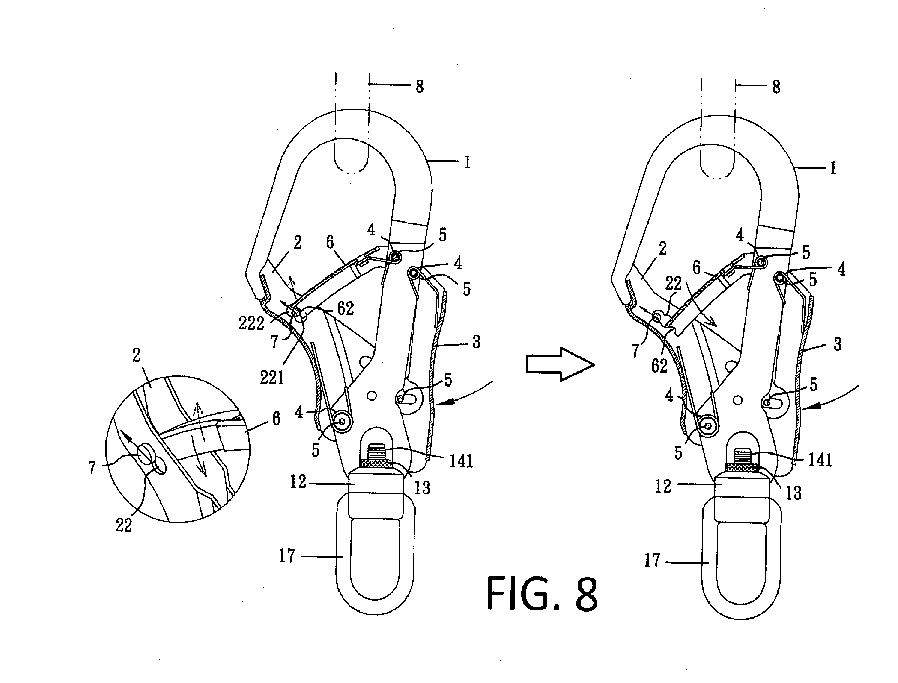

In use, a line 8 may be looped the hook body 1 and is prevented from disengaging from the hook body 1. For removing the line 8 a user has to first push the push button 231 to clear the through hole 112. Thus, the gate 2 is partially unlocked. It is contemplated by the invention that any external force (indicated by two arrows of dotted line) exerted on the components (e.g., the gate 2 and the straddle member 3 shown in FIG. 7) will not unlock the gate 2 unless the gate 2 is completely unlocked. Further, the user may manually push the lock pin 7 from the right second hole 222 to the left first holes 221 to clear the recesses 62 with the counterclockwise movement of the torsion spring 4 associated with the locking member 6 (see FIG. 8). Next, a user may manually clockwise pivot the gate 2 as indicated by the left arrow of FIG. 9 and counterclockwise pivot the straddle member 3 as indicated by the right arrow of FIG. 9 respectively. As a result, the mouth of the hook is open so that the user may remove the line 8 via the open mouth of the hook.

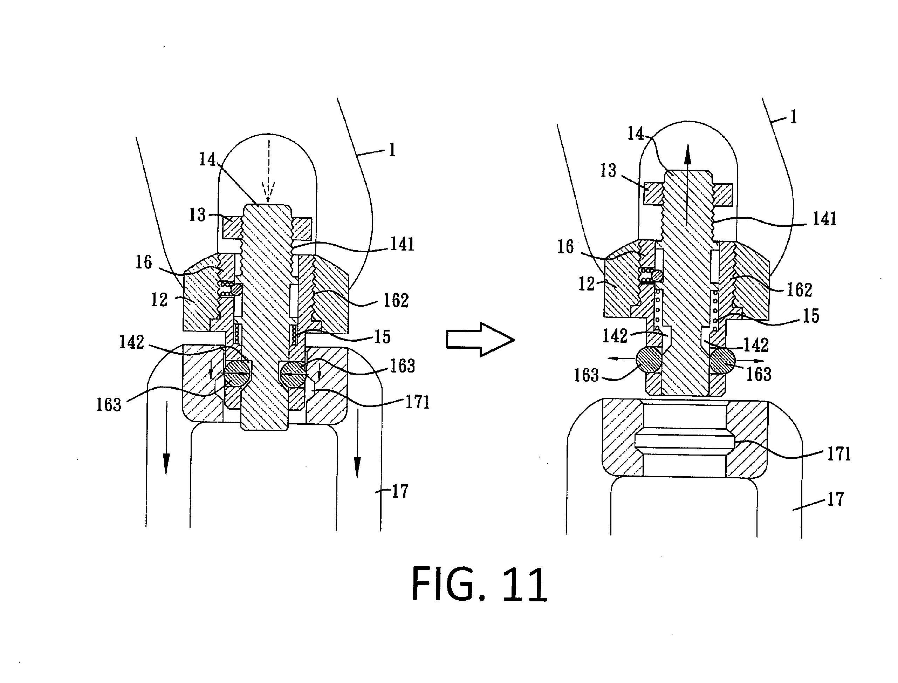

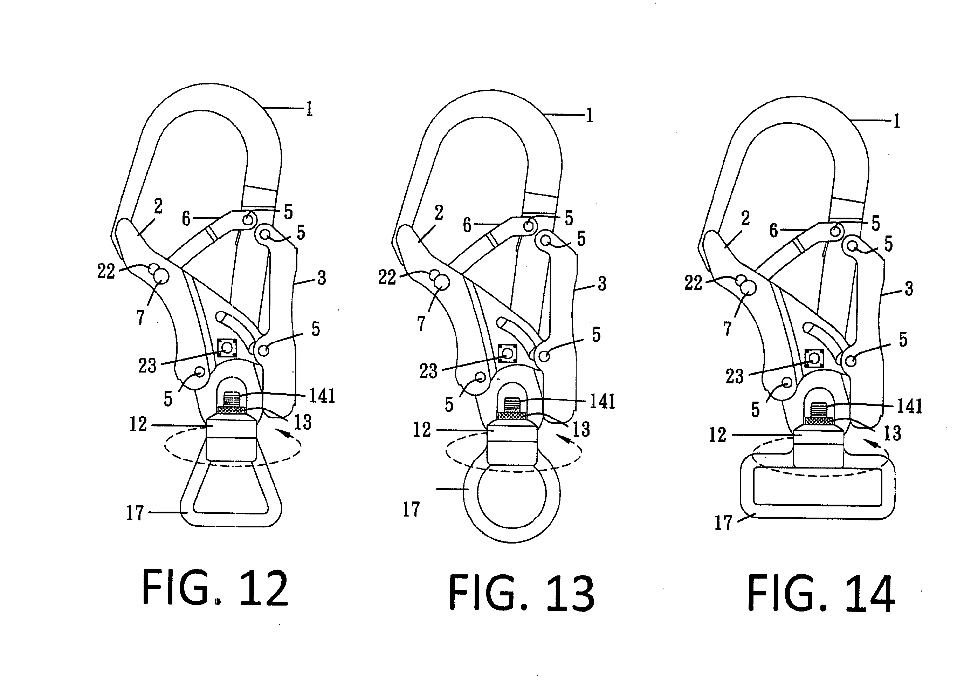

Removal of the rotatable hanging loop 17 will be described in detail below (see FIGS. 19 and 11). First, a user may rotate the nut 13 upward a distance (i.e., unfastening the bolt 14). Next, push the bolt 14 downward to compress the spring 15 and push down the rotatable hanging loop 17 to move the steel balls 163 from the trough 171 to the groove 142 (see the left side of FIG. 11). Finally, pull the hook body 1 upward to disengage the rotatable hanging loop 17 from the hook body 1. The disengaged rotatable hanging loop 17 can be replaced with a new one or a different one such as a first rotatable hanging loop 17 shown in FIG. 12, a second rotatable hanging loop 17 shown in FIG. 13, or a third rotatable hanging loop 17 shown in FIG. 14.

While the invention has been described in terms of preferred embodiments, those skilled in the art will recognize that the invention can be practiced with modifications within the spirit and scope of the appended claims.

## Claims

1. A safety hook comprising:
a hook body (1) comprising an internally threaded ring portion (12) on bottom; a bolt (14) including upper threads (141) passing the ring portion (12), two intermediate annular flange members (143), and a lower annular groove (142); a nut (13) threadedly secured to the upper threads (141); a biasing member (15); a rotatable hanging loop (17) including a top ring portion (173), an annular trough (171) on an inner surface of the top ring portion (173), and a loop (172) depending downward from the top ring portion (173); and a cylindrical connection member (16) including a lengthwise central hollow (161), external threads (162) on an upper portion, a spring depressible detent (164) through the upper portion, an intermediate annular flange (165), and two opposite steel balls (163) each through a lower portion wherein in an assembled state, the bolt (14) is disposed in the hollow (161), a portion of the connection member (16) below the flange (165) is disposed in the top ring portion (173) with the steel balls (163) rotatably disposed in both the lower portion of the connection member (16) and the trough (171), the flange (165) is rested on the hanging loop (17), the detent (164) has one end urged against an outer surface of the bolt (14) between the flange members (143) and the other end urged against an inner surface of the ring portion (12), the external threads (162) are threadedly secured to the inner surface of the ring portion (12), and the biasing member (15) is substantially put on the bolt (14) and biased between the lower one of the flange members (143) and the groove (142); and
a gate (2) pivotably secured to the hook body (1) for opening or closing mouth of the hook body (1).
